# EUROPEAN PATENT APPLICATION

(11) **EP 4 827 243 A1**
(43) Date of publication of application: **21.10.2026**
(21) Application number: 26172883.6
(22) Date of filing: 16.04.2026
(51) Int. Cl.: H05B 47/16, G04G 5/00, G04G 7/00, G04R 20/14

(54) **LIGHTING DEVICE HAVING TIME CALIBRATION MECHANISM AND METHOD THEREOF**

(30) Priority: 16.04.2025 CN 202510478067
(71) Applicant: Xiamen PVTECH Co., Ltd., Xiamen, Fujian 361101 (CN)
(72) Inventor: WANG, Ronghui, Xiamen, 361101 (CN); LU, Fuxing, Xiamen, 361101 (CN); XU, Chengquan, Xiamen, 361101 (CN)
(74) Representative: Lang, Christian

(57) **Abstract**

The disclosure provides a lighting device (1) having a time calibration mechanism and the method thereof. The lighting device (1) includes a light-emitting module (11), a timing module (12), a control module (13) and a communication module (14). The timing module (12) generates a local time signal (Rs). The control module (13) is coupled to the light-emitting module (11) and the timing module (12), and controls the activation time of the light-emitting module (11) according to the local time signal (Rs) and a lighting control table (131). The communication module (14) is coupled to the control module (13). The control module (13) periodically receives, through the communication module (14), a first time synchronization signal (Ts1) transmitted from a first external device (ED1), updates the local time signal (Rs) according to the first time synchronization signal (Ts1) to generate an updated local time signal (Rs'), and controls the activation time of the light-emitting module (11) according to the updated local time signal (Rs') and the lighting control table (131).

## Description

### TECHNICAL FIELD

The disclosure relates to a lighting device, in particular to a lighting device having a time calibration mechanism. The disclosure further relates to the time calibration method of the lighting device.

### BACKGROUND

With the advancement of technology, the demand for applications of sensor-based lighting technologies has been increasing. To satisfy the requirements of different applications, lighting devices are required not only to achieve high energy efficiency, but also to provide precise timing control functions in order to accommodate practical operating conditions.

However, some currently available lighting devices rely on external networks (such as 4G, 5G, or WiFi) to achieve accurate timing control, which significantly increases the overall cost of the lighting devices.

In addition, some currently available lighting devices adopt local timers to avoid the need for network connectivity. Nevertheless, due to accumulated timing errors, time deviations may occur after long-term operation, thereby severely affecting the reliability of the timing control function.

Accordingly, how to effectively address the above issues has become an urgent matter.

### SUMMARY

One embodiment of the disclosure provides a lighting device having a time calibration mechanism, which includes a light-emitting module, a timing module, a control module and a communication module. The timing module generates a local time signal. The control module is coupled to the light-emitting module and the timing module, and controls the activation time of the light-emitting module according to the local time signal and a lighting control table. The communication module is coupled to the control module. The control module periodically receives, through the communication module, a first time synchronization signal transmitted from a first external device, update the local time signal according to the first time synchronization signal to generate an updated local time signal, and control the activation time of the light-emitting module according to the updated local time signal and the lighting control table.

Another embodiment of the disclosure provides a time calibration method for a lighting device, which includes the following steps: generating, by a timing module, a local time signal; controlling, by a control module, the activation time of a light-emitting module according to the local time signal and a lighting control table; periodically receiving, by the control module through a communication module, a first time synchronization signal transmitted from a first external device; updating, by the control module, the local time signal according to the first time synchronization signal to generate an updated local time signal; and controlling, by the control module, the activation time of the light-emitting module according to the updated local time signal and the lighting control table.

Further scope of applicability of the present application will become more apparent from the detailed description given hereinafter. However, it should be understood that the detailed description and specific examples, while indicating exemplary embodiments of the disclosure, are given by way of illustration only, since various changes and modifications within the spirit and scope of the disclosure will become apparent to those skilled in the art from this detailed description.

### BRIEF DESCRIPTION OF DRAWINGS

The disclosure will become more fully understood from the detailed description given herein below and the accompanying drawings which are given by way of illustration only, and thus are not limitative of the disclosure and wherein:
FIG. 1 is a block diagram illustrating a circuit structure of a lighting device having a time calibration mechanism in accordance with a first embodiment of the disclosure.
FIG. 2 is a first schematic view illustrating an operating state of the lighting device having the time calibration mechanism according to the first embodiment of the disclosure.
FIG. 3 is a second schematic view illustrating the operating state of the lighting device having the time calibration mechanism according to the first embodiment of the disclosure.
FIG. 4 is a flow chart illustrating a time calibration method of the lighting device according to the first embodiment of the disclosure.
FIG. 5 is a schematic view illustrating an operating state of a lighting device having a time calibration mechanism according to a second embodiment of the disclosure.
FIG. 6 is a flow chart illustrating a time calibration method of the lighting device according to the second embodiment of the disclosure.

### DETAILED DESCRIPTION

In the following detailed description, for purposes of explanation, numerous specific details are set forth in order to provide a thorough understanding of the disclosed embodiments. It will be apparent, however, that one or more embodiments may be practiced without these specific details. In other instances, well-known structures and devices are schematically shown in order to simplify the drawing. It should be understood that, when it is described that an element is "coupled" or "connected" to another element, the element may be "directly coupled" or "directly connected" to the other element or "coupled" or "connected" to the other element through a third element. In contrast, it should be understood that, when it is described that an element is "directly coupled" or "directly connected" to another element, there are no intervening elements.

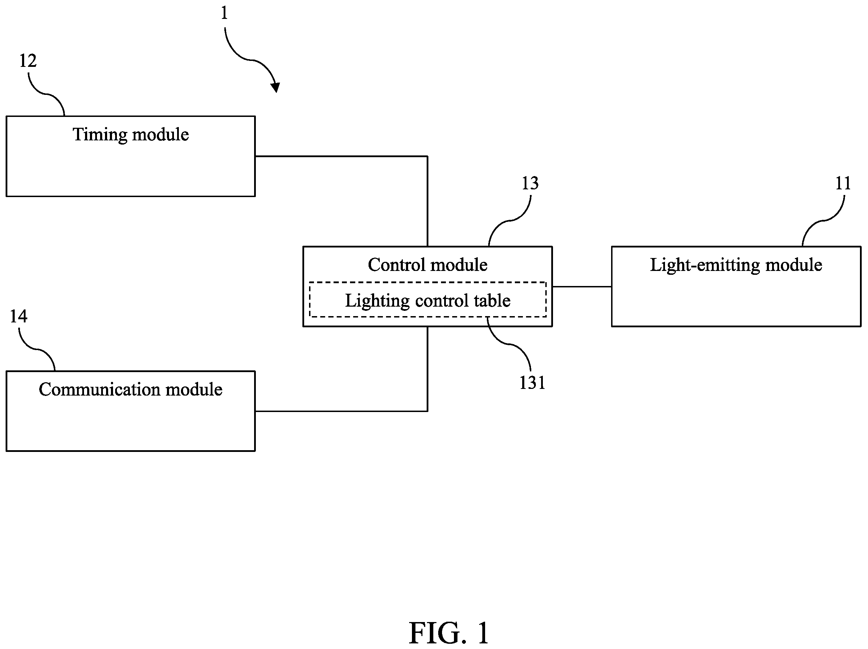

Please refer to FIG. 1, which is a block diagram illustrating a circuit structure of a lighting device having a time calibration mechanism in accordance with a first embodiment of the disclosure. As shown in FIG. 1, the lighting device 1 includes a light-emitting module 11, a timing module 12, a control module 13, and a communication module 14. The timing module 12, the control module 13, and the communication module 14 are connected to the control module 13. In one embodiment, the light-emitting module 11 may be a light emitting diode (LED), a light bulb, a fluorescent tube, or other similar components. In one embodiment, the timing module 12 may be a real-time clock module or another circuit having a timing function. In one embodiment, the communication module 14 may be a Bluetooth module, a WiFi module, a Zigbee module, or other currently available communication circuits. In one embodiment, the control module 13 may be a microcontroller (MCU), a central processing unit (CPU), an application-specific integrated circuit chip (ASIC), a field programmable gate array (FPGA), or other similar components.

The embodiment just exemplifies the disclosure and is not intended to limit the scope of the disclosure; any equivalent modification and variation according to the spirit of the disclosure is to be also included within the scope of the following claims and their equivalents.

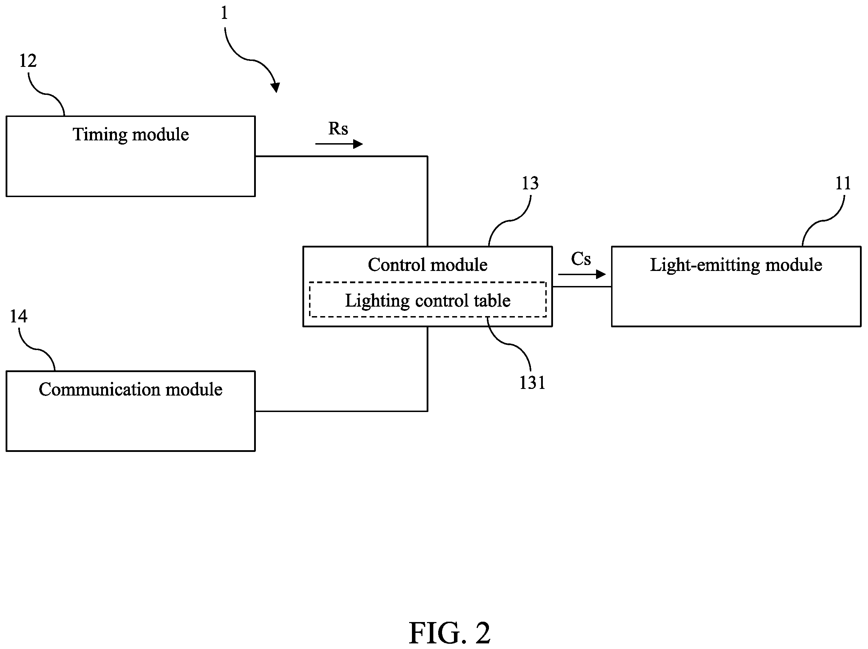

Please refer to FIG. 2, which is a first schematic view illustrating an operating state of the lighting device having the time calibration mechanism according to the first embodiment of the disclosure. As shown in FIG. 2, the timing module 12 generates a local time signal Rs.

The control module 13 generates a control signal Cs according to the local time signal Rs and a lighting control table 131 to control the activation time of the light-emitting module 11. The lighting control table 131 may be stored in the internal memory of the control module 13 or in an external memory. The lighting control table 131 may record the activation time of the light-emitting module 11, while the light-emitting module 11 remains in the off state at other times. The user may adjust the lighting control table 131 according to actual application requirements.

The embodiment just exemplifies the disclosure and is not intended to limit the scope of the disclosure; any equivalent modification and variation according to the spirit of the disclosure is to be also included within the scope of the following claims and their equivalents.

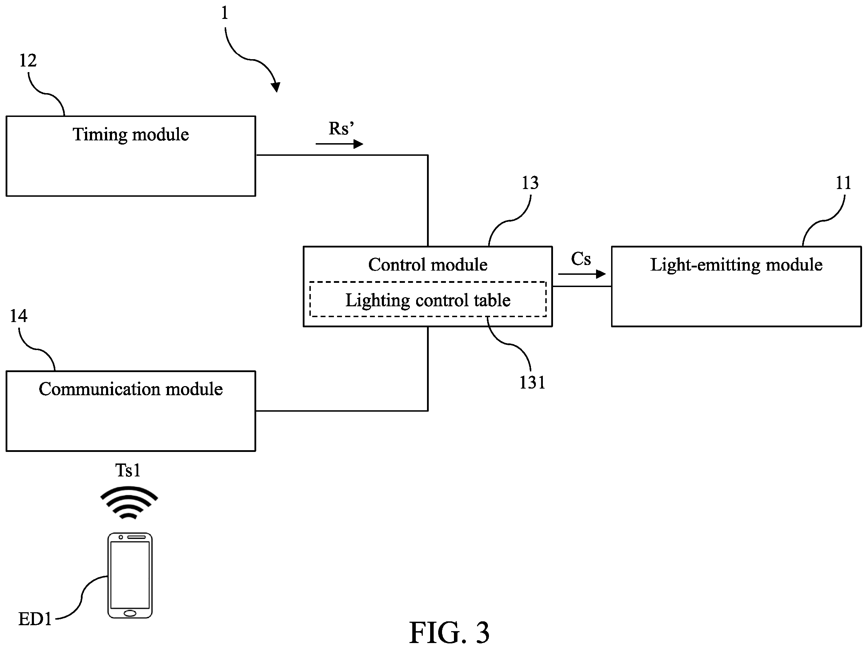

Please refer to FIG. 3, which is a second schematic view illustrating the operating state of the lighting device having the time calibration mechanism according to the first embodiment of the disclosure. As shown in FIG. 3, the control module 13 periodically receives, through the communication module 14, a first time synchronization signal Ts1 transmitted from a first external device ED1, and updates the local time signal Rs according to the first time synchronization signal Ts1 to generate an updated local time signal Rs'. The time interval at which the control module 13 receives the first time synchronization signal Ts1 transmitted from the first external device ED1 may be adjusted according to actual requirements. For example, the time interval may be several hours, several days, or several months.

Then, the control module 13 controls the activation time of the light-emitting module 11 according to the updated local time signal Rs' and the lighting control table 131.

As set forth above, in this embodiment, the lighting device 1 can perform precise time calibration through the above time calibration mechanism without being connected to an external network. In this manner, the lighting device 1 can more accurately control the activation time of the lighting device 1 so as to avoid time deviation occurring after long-term operation due to accumulated errors. Accordingly, the timing function of the lighting device 1 can maintain high accuracy for a long period of time so as to satisfy the requirements of different applications.

In addition, in this embodiment, the control module 13 controls the activation time of the light-emitting module 11 according to the local time signal Rs provided by the timing module 12 and the lighting control table 131. The timing module 12 may be a real-time clock module. Accordingly, the control module 13 can effectively control the activation time of the light-emitting module 11 according to actual requirements to achieve a desired lighting effect, and the configuration can be implemented through a simple circuit structure. Therefore, the lighting device 1 can effectively solve the problems of the prior art without significantly increasing the cost of the lighting device 1.

Moreover, in this embodiment, the lighting device 1 can achieve a high-precision timing function and maintain accurate time control for a long period of time. Therefore, the lighting device 1 can be applied to various intelligent applications, such as smart home systems, industrial automation, and smart parking facilities. Accordingly, the lighting device 1 is more suitable for future development trends toward intelligentization and energy efficiency. Through precise timing control, the lighting device 1 can further optimize energy utilization efficiency and enhance system reliability so as to meet future development trends and diverse requirements.

In another embodiment, the lighting device 1 may further include a verification mechanism. Through this verification mechanism, the lighting device 1 may perform time calibration according to time synchronization signals from two or more external devices, thereby further improving the accuracy of the timing function of the lighting device 1. In this manner, the lighting device 1 can more precisely control the activation time of the lighting device 1 so as to avoid time deviation occurring after long-term operation due to accumulated errors. Accordingly, the timing function of the lighting device 1 can maintain high accuracy for a long period of time and better satisfy the requirements of different applications.

The embodiment just exemplifies the disclosure and is not intended to limit the scope of the disclosure; any equivalent modification and variation according to the spirit of the disclosure is to be also included within the scope of the following claims and their equivalents.

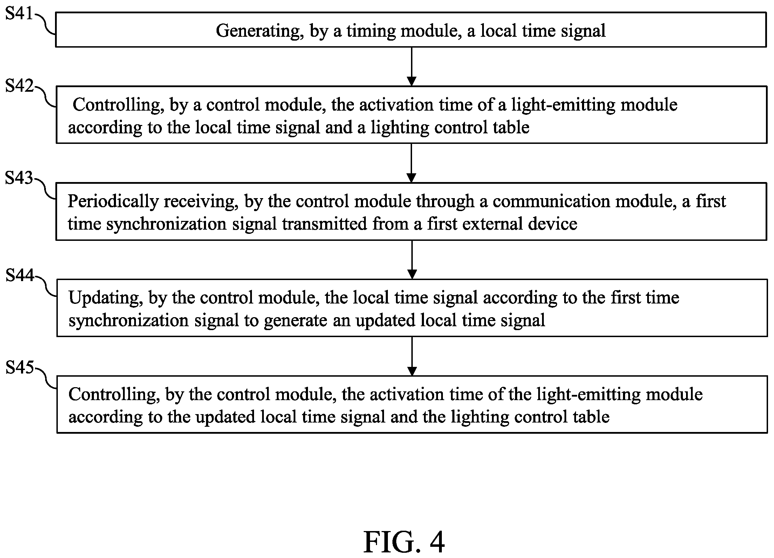

Please refer to FIG. 4, which is a flow chart illustrating a time calibration method of the lighting device according to the first embodiment of the disclosure. As shown in FIG. 4, the time calibration method of the lighting device 1 in this embodiment includes the following steps:
Step S41: generating, by a timing module, a local time signal.
Step S42: controlling, by a control module, the activation time of a light-emitting module according to the local time signal and a lighting control table.
Step S43: periodically receiving, by the control module through a communication module, a first time synchronization signal transmitted from a first external device.
Step S44: updating, by the control module, the local time signal according to the first time synchronization signal to generate an updated local time signal.
Step S45: controlling, by the control module, the activation time of the light-emitting module according to the updated local time signal and the lighting control table.

The embodiment just exemplifies the disclosure and is not intended to limit the scope of the disclosure; any equivalent modification and variation according to the spirit of the disclosure is to be also included within the scope of the following claims and their equivalents.

Although the operations of the method(s) herein are shown and described in a particular order, the order of the operations of each method may be altered so that certain operations may be performed in an inverse order or so that certain operations may be performed, at least in part, concurrently with other operations. In another embodiment, instructions or sub-operations of distinct operations may be implemented in an intermittent and/or alternating manner.

It is worthy to point out that some currently available lighting devices rely on external networks (such as 4G, 5G, or WiFi) to achieve accurate timing control, which significantly increases the overall cost of the lighting devices. Besides, some currently available lighting devices adopt local timers to avoid the need for network connectivity. Nevertheless, due to accumulated timing errors, time deviations may occur after long-term operation, thereby severely affecting the reliability of the timing control function. By contrast, according to one embodiment of the disclosure, the lighting device includes a light-emitting module, a timing module, a control module and a communication module. The timing module generates a local time signal. The control module is coupled to the light-emitting module and the timing module, and controls the activation time of the light-emitting module according to the local time signal and a lighting control table. The communication module is coupled to the control module. The control module periodically receives, through the communication module, a first time synchronization signal transmitted from a first external device, update the local time signal according to the first time synchronization signal to generate an updated local time signal, and control the activation time of the light-emitting module according to the updated local time signal and the lighting control table. Through the above time calibration mechanism, the lighting device can perform precise time calibration without being connected to an external network. In this way, the lighting device can more precisely control the activation time of the lighting device so as to avoid time deviation occurring after long-term operation due to accumulated errors. Accordingly, the timing function of the lighting device can maintain high accuracy for a long period of time to meet the requirements of different applications.

Further, according to one embodiment of the disclosure, the control module periodically receives, through the communication module, a second time synchronization signal transmitted from a second external device, and updates the local time signal according to the first time synchronization signal and the second time synchronization signal to generate the updated local time signal. The control module controls the activation time of the light-emitting module according to the updated local time signal and the lighting control table. Through the above verification mechanism, the lighting device can perform time calibration according to time synchronization signals from two or more external devices, thereby further improving the accuracy of the timing function of the lighting device. In this way, the lighting device can more precisely control the activation time of the lighting device so as to avoid time deviation occurring after long-term operation due to accumulated errors. Accordingly, the timing function of the lighting device can maintain high accuracy for a long period of time and better satisfy the requirements of different applications.

In addition, according to one embodiment of the disclosure, the control module controls the activation time of the light-emitting module according to the local time signal provided by the timing module and the lighting control table. The timing module may be a real-time clock module. Accordingly, the control module can effectively control the activation time of the light-emitting module according to actual requirements to achieve a desired lighting effect, and the configuration can be implemented through a simple circuit structure. Therefore, the lighting device can effectively solve the problems of the prior art without significantly increasing the cost of the lighting device.

Moreover, according to one embodiment of the disclosure, the lighting device can achieve a high-precision timing function and maintain accurate time control for a long period of time. Therefore, the lighting device can be applied to various intelligent applications, such as smart home systems, industrial automation, and smart parking facilities. Accordingly, the lighting device is more suitable for future development trends toward intelligence and energy efficiency. Through precise timing control, the lighting device can further optimize energy utilization efficiency and enhance system reliability so as to meet future development trends and diverse requirements.

Furthermore, according to one embodiment of the disclosure, the lighting device adopts a simple design architecture and can achieve core functions such as precise timing and energy-saving control without excessively increasing cost. Based on the foregoing reasons, the lighting device not only significantly improves its practicality but can also be flexibly applied to various applications. Accordingly, the lighting device can be more comprehensive in application and more flexible in use. Thus, the lighting device having the time calibration mechanism can definitely achieve great technical effects.

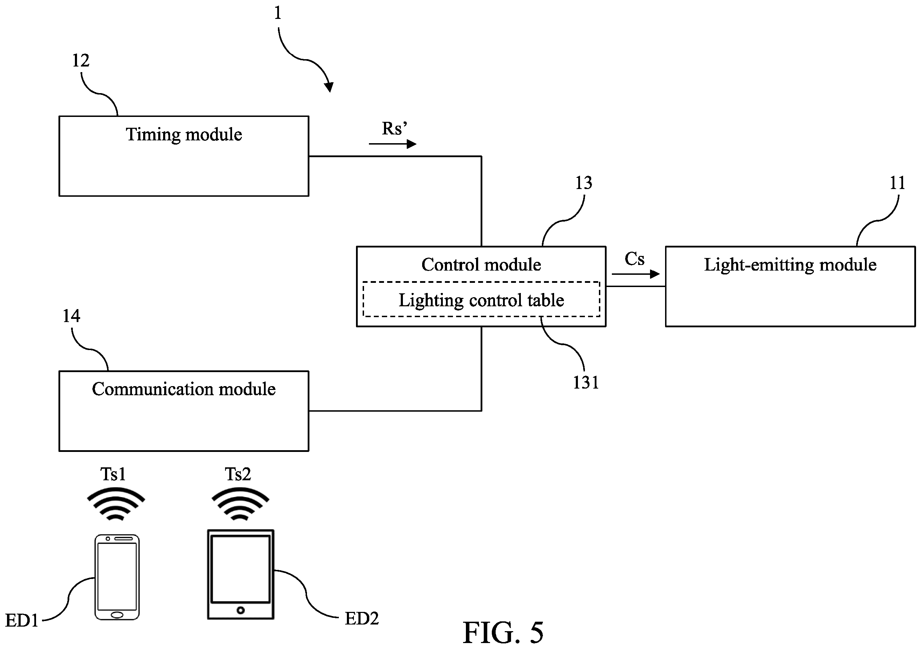

Please refer to FIG. 5, which is a schematic view illustrating an operating state of a lighting device having a time calibration mechanism according to a second embodiment of the disclosure. Similarly, the timing module 12 generates a local time signal Rs. The control module 13 generates a control signal Cs according to the local time signal Rs and the lighting control table 131 to control the activation time of the light-emitting module 11 as shown in FIG. 2.

As shown in FIG. 5, the difference between this embodiment and the previous embodiment is that the control module 13, in this embodiment, not only periodically receives, through the communication module 14, a first time synchronization signal Ts1 transmitted from a first external device ED1, but also receives a second time synchronization signal Ts2 transmitted from a second external device ED2. Then, the control module 13 updates the local time signal Rs according to the first time synchronization signal Ts1 and the second time synchronization signal Ts2 to generate an updated local time signal Rs'.

The control module 13 determines the priority of the first time synchronization signal Ts1 and the priority of the second time synchronization signal Ts2 according to the time of the first time synchronization signal Ts1 and the time of the second time synchronization signal Ts2. For example, the first time synchronization signal Ts1 has a first priority and the second time synchronization signal Ts2 has a second priority. When the time of the first time synchronization signal Ts1 is later than the time of the second time synchronization signal Ts2, the first priority is greater than the second priority. Conversely, the second priority is greater than the first priority. For example, the time of the first time synchronization signal Ts1 is XXXX year X month X day 13:20:30, and the time of the second time synchronization signal Ts2 is XXXX year X month X day 13:20:12. Accordingly, the first priority is greater than the second priority.

Then, the control module 13 calculates a difference between the time of the first time synchronization signal Ts1 and the time of the second time synchronization signal Ts2 and calculates an average value of the difference. That is, the control module 13 divides the difference by a number of external devices. In this embodiment, the number of external devices is 2 including the first external device ED1 and the second external device ED2.

Next, the control module 13 subtracts the average value from the time of the time synchronization signal having the higher priority to generate an updated time synchronization signal, and updates the local time signal Rs according to the updated time synchronization signal to generate the updated local time signal Rs'. For example, the time of the first time synchronization signal Ts1 is XXXX year X month X day 13:20:30, and the time of the second time synchronization signal Ts2 is XXXX year X month X day 13:20:12. The first time synchronization signal Ts1 has a higher priority. The control module 13 calculates the difference (18 seconds) between the time of the first time synchronization signal Ts1 and the time of the second time synchronization signal Ts2 and calculates the average value (9 seconds) of the difference. Then, the control module 13 subtracts the average value (9 seconds) from the time of the first time synchronization signal Ts1 having the higher priority to generate the updated time synchronization signal (XXXX year X month X day 13:20:21), and updates the local time signal Rs according to the updated time synchronization signal to generate the updated local time signal Rs'.

Finally, the control module 13 controls the activation time of the light-emitting module 11 according to the updated local time signal Rs' and the lighting control table 131.

Through the verification mechanism, the lighting device 1 can perform time calibration according to time synchronization signals from two or more external devices and eliminate errors in the time synchronization signals of the external devices, thereby further improving the accuracy of the timing function of the lighting device 1. In this way, the lighting device 1 can more precisely control the activation time of the lighting device 1 so as to avoid time deviation occurring after long-term operation due to accumulated errors. Accordingly, the timing function of the lighting device 1 can maintain high accuracy for a long period of time and better satisfy the requirements of different applications.

When there are more than three external devices, the control module 13 may select two external devices having higher priorities and perform the same calculation mechanism according to their time synchronization signals.

In addition, as described above, the lighting device 1 is implemented according to a simplified and efficient design strategy, which not only successfully controls production cost but also effectively integrates high-precision timing control and intelligent energy-saving management technologies. Through such a design strategy that balances cost and performance, the lighting device 1 can achieve high practicality. Furthermore, the lighting device 1 adopts a modular design so that the lighting device 1 can achieve excellent system compatibility and can be easily adapted to different voltage environments and installation scenarios ranging from residential environments to industrial environments. Accordingly, the application flexibility of the lighting device 1 can be significantly improved, thereby providing an ideal solution for the widespread adoption of intelligent lighting technology in commercial, industrial, and civil fields so as to meet future development trends.

The embodiment just exemplifies the disclosure and is not intended to limit the scope of the disclosure; any equivalent modification and variation according to the spirit of the disclosure is to be also included within the scope of the following claims and their equivalents.

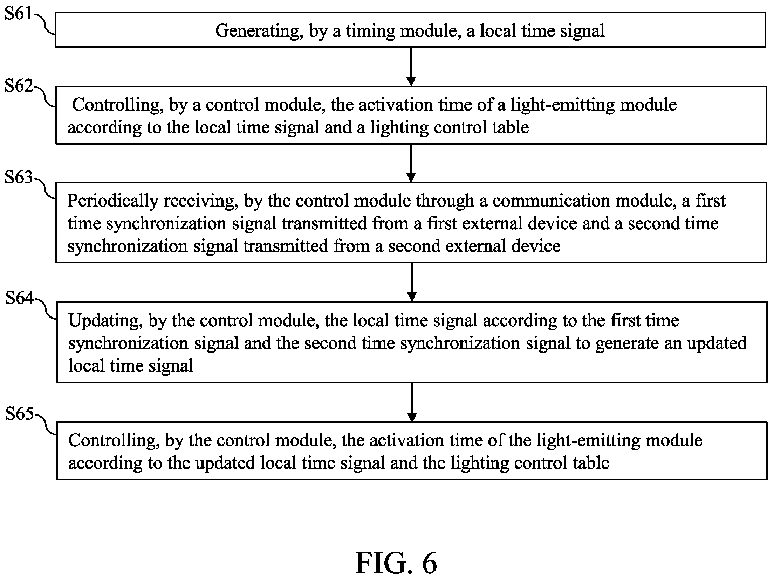

Please refer to FIG. 6, which is a flow chart illustrating a time calibration method of the lighting device according to the second embodiment of the disclosure. As shown in FIG. 6, the time calibration method of the lighting device 1 in this embodiment includes the following steps:
Step S61: generating, by a timing module, a local time signal.
Step S62: controlling, by a control module, the activation time of a light-emitting module according to the local time signal and a lighting control table.
Step S63: periodically receiving, by the control module through a communication module, a first time synchronization signal transmitted from a first external device and a second time synchronization signal transmitted from a second external device.
Step S64: updating, by the control module, the local time signal according to the first time synchronization signal and the second time synchronization signal to generate an updated local time signal.
Step S65: controlling, by the control module, the activation time of the light-emitting module according to the updated local time signal and the lighting control table.

The embodiment just exemplifies the disclosure and is not intended to limit the scope of the disclosure; any equivalent modification and variation according to the spirit of the disclosure is to be also included within the scope of the following claims and their equivalents.

Although the operations of the method(s) herein are shown and described in a particular order, the order of the operations of each method may be altered so that certain operations may be performed in an inverse order or so that certain operations may be performed, at least in part, concurrently with other operations. In another embodiment, instructions or sub-operations of distinct operations may be implemented in an intermittent and/or alternating manner.

To sum up, according to one embodiment of the disclosure, the lighting device includes a light-emitting module, a timing module, a control module and a communication module. The timing module generates a local time signal. The control module is coupled to the light-emitting module and the timing module, and controls the activation time of the light-emitting module according to the local time signal and a lighting control table. The communication module is coupled to the control module. The control module periodically receives, through the communication module, a first time synchronization signal transmitted from a first external device, update the local time signal according to the first time synchronization signal to generate an updated local time signal, and control the activation time of the light-emitting module according to the updated local time signal and the lighting control table. Through the above time calibration mechanism, the lighting device can perform precise time calibration without being connected to an external network. In this way, the lighting device can more precisely control the activation time of the lighting device so as to avoid time deviation occurring after long-term operation due to accumulated errors. Accordingly, the timing function of the lighting device can maintain high accuracy for a long period of time to meet the requirements of different applications.

Further, according to one embodiment of the disclosure, the control module periodically receives, through the communication module, a second time synchronization signal transmitted from a second external device, and updates the local time signal according to the first time synchronization signal and the second time synchronization signal to generate the updated local time signal. The control module controls the activation time of the light-emitting module according to the updated local time signal and the lighting control table. Through the above verification mechanism, the lighting device can perform time calibration according to time synchronization signals from two or more external devices, thereby further improving the accuracy of the timing function of the lighting device. In this way, the lighting device can more precisely control the activation time of the lighting device so as to avoid time deviation occurring after long-term operation due to accumulated errors. Accordingly, the timing function of the lighting device can maintain high accuracy for a long period of time and better satisfy the requirements of different applications.

In addition, according to one embodiment of the disclosure, the control module controls the activation time of the light-emitting module according to the local time signal provided by the timing module and the lighting control table. The timing module may be a real-time clock module. Accordingly, the control module can effectively control the activation time of the light-emitting module according to actual requirements to achieve a desired lighting effect, and the configuration can be implemented through a simple circuit structure. Therefore, the lighting device can effectively solve the problems of the prior art without significantly increasing the cost of the lighting device.

Moreover, according to one embodiment of the disclosure, the lighting device can achieve a high-precision timing function and maintain accurate time control for a long period of time. Therefore, the lighting device can be applied to various intelligent applications, such as smart home systems, industrial automation, and smart parking facilities. Accordingly, the lighting device is more suitable for future development trends toward intelligence and energy efficiency. Through precise timing control, the lighting device can further optimize energy utilization efficiency and enhance system reliability so as to meet future development trends and diverse requirements.

Furthermore, according to one embodiment of the disclosure, the lighting device adopts a simple design architecture and can achieve core functions such as precise timing and energy-saving control without excessively increasing cost. Based on the foregoing reasons, the lighting device not only significantly improves its practicality but can also be flexibly applied to various applications. Accordingly, the lighting device can be more comprehensive in application and more flexible in use.

It will be apparent to those skilled in the art that various modifications and variations can be made to the disclosed embodiments. It is intended that the specification and examples be considered as exemplary only, with a true scope of the disclosure being indicated by the following claims and their equivalents.

## Claims

1. A lighting device (1) having a time calibration mechanism, comprising:
a light-emitting module (11);
a timing module (12) configured to generate a local time signal (Rs);
a control module (13) coupled to the light-emitting module (11) and the timing module (12), and configured to control an activation time of the light-emitting module (11) according to the local time signal (Rs) and a lighting control table (131); and
a communication module (14) coupled to the control module (13);
wherein the control module (13) is configured to periodically receive, through the communication module (14), a first time synchronization signal (Ts1) transmitted from a first external device (ED1), update the local time signal (Rs) according to the first time synchronization signal (Ts1) to generate an updated local time signal (Rs'), and control the activation time of the light-emitting module (11) according to the updated local time signal (Rs') and the lighting control table (131).

2. The lighting device (1) as claimed in claim 1, wherein the control module (13) is further configured to periodically receive, through the communication module (14), a second time synchronization signal (Ts2) transmitted from a second external device (ED2), update the local time signal (Rs) according to the first time synchronization signal (Ts1) and the second time synchronization signal (Ts2) to generate the updated local time signal (Rs'), and control the activation time of the light-emitting module (11) according to the updated local time signal (Rs') and the lighting control table (131).

3. The lighting device (1) as claimed in claim 1, wherein the timing module (12) is a real-time clock module.

4. The lighting device (1) as claimed in claim 1, wherein the communication module (14) is a Bluetooth module, a WiFi module, or a Zigbee module.

5. The lighting device (1) as claimed in claim 1, wherein the control module (13) is a microcontroller, a central processing unit, an application-specific integrated circuit chip, or a field programmable gate array.

6. A time calibration method for a lighting device (1), comprising:
generating, by a timing module (12), a local time signal (Rs);
controlling, by a control module (13), an activation time of a light-emitting module (11) according to the local time signal (Rs) and a lighting control table (131);
periodically receiving, by the control module (13) through a communication module (14), a first time synchronization signal (Ts1) transmitted from a first external device (ED1);
updating, by the control module (13), the local time signal (Rs) according to the first time synchronization signal (Ts1) to generate an updated local time signal (Rs'); and
controlling, by the control module (13), the activation time of the light-emitting module (11) according to the updated local time signal (Rs') and the lighting control table (131).

7. The time calibration method as claimed in claim 6, wherein the step of updating, by the control module (13), the local time signal (Rs) according to the first time synchronization signal (Ts1) to generate the updated local time signal (Rs') further comprises:
periodically receiving, by the control module (13) through the communication module (14), a second time synchronization signal (Ts2) transmitted from a second external device (ED2);
updating, by the control module (13), the local time signal (Rs) according to the first time synchronization signal (Ts1) and the second time synchronization signal (Ts2) to generate the updated local time signal (Rs'); and
controlling, by the control module (13), the activation time of the light-emitting module (11) according to the updated local time signal (Rs') and the lighting control table (131).

8. The time calibration method as claimed in claim 6, wherein the timing module (12) is a real-time clock module.

9. The time calibration method as claimed in claim 6, wherein the communication module (14) is a Bluetooth module, a WiFi module, or a Zigbee module.

10. The time calibration method as claimed in claim 6, wherein the control module (13) is a microcontroller, a central processing unit, an application-specific integrated circuit chip, or a field programmable gate array.
